# EUROPEAN PATENT SPECIFICATION

(11) **EP 3 588 237 B1**
(45) Date of publication and mention of the grant of the patent: **03.11.2021**
(21) Application number: 18885402.0
(22) Date of filing: 02.08.2018
(51) Int. Cl.: F25B 21/02, F25D 21/04, B01L 1/02, G05D 27/02

(54) **ELECTRONIC COOLING ANTI-CONDENSATION SYSTEM, AND ANTI-CONDENSATION METHOD FOR SAME**
ANTIKONDENSATIONSSYSTEM FÜR ELEKTRONISCHE KÜHLUNG UND ANTIKONDENSATIONSVERFAHREN DAFÜR
SYSTÈME ANTI-CONDENSATION DE REFROIDISSEMENT ÉLECTRONIQUE, ET PROCÉDÉ ANTI-CONDENSATION ASSOCIÉ

(30) Priority: 08.12.2017 CN 201711290069
(43) Date of publication of application: 01.01.2020
(73) Proprietor: Dongguan City Simplewell Technology Co., Ltd., Dongguan, Guangdong 523000 (CN)
(72) Inventor: XIA, Keyu, Dongguan, Guangdong 523000 (CN)
(74) Representative: Lapienis, Juozas
(86) International application number: PCT/CN2018/098217
(87) International publication number: WO 2019/109649

(56) References cited:
- EP-A1- 2 148 146
- EP-A1- 2 309 247
- CN-A- 104 538 866
- CN-A- 107 102 659
- CN-A- 108 255 215
- CN-U- 205 783 494
- JP-A- H10 267 493
- JP-A- 2000 292 480
- KR-A- 20170 031 445
- KR-B1- 101 677 957
- US-A1- 2012 239 220

## Description

### TECHNICAL FIELD

The present disclosure relates to the technical field of detecting devices, and more specifically, to an electronic cooling anti-condensation system and an anti-condensation method for the same.

### BACKGROUND

Materials of the existing furniture, car accessories and the like contain volatile hazardous air such as formaldehyde, volatile organic compound (VOC) and the like, and when the concentration of the volatile hazardous air exceeds a certain range, the volatile hazardous air will cause harm to human bodies. Reasonable collection of the volatile hazardous air such as the formaldehyde, the VOC and the like in the materials is an important link of the detection technology.

Currently, there are multiple devices for testing the release amount of the volatile hazardous air such as the formaldehyde, the VOC and the like in the industry, and these devices can cool or heat by electronic cooling plates. However, the electronic cooling plates usually cause condensation in a testing chamber of the device during cooling to influence test effects.

The known prior art can be, in particular, JPH10 267493 A publication, KR 101 677 957 B1 publication, JP 2000 292480 A publication and EP 2 309 247 A1 publication.

JP H10 267493 A publication discloses a grain refrigeration apparatus which can cryopreserve the grain, and a cereal grain refrigeration methods and refrigeration equipment forming a long-term storage possible environment.

KR 101 677 957 B1 publication discloses a thermohygrostat which ensures adjustment in a temperature and humidity in the more effective way and can be miniaturized owing to an improved structure, comprising: a chamber part having an accommodating space therein; a humidifying part generating humidified air so as to supply the same to the chamber part; a thermoconductive block disposed on a fluid flowing passage formed between the accommodating space and the humidifying part and including a humidified air flowing channel for drawing in and out the humidified air; a thermoelectric module touching the thermoconductive block, absorbing and emitting heat, and regulating the temperature of the thermoconductive block; and at least one rate-regulating plate disposed on the humidified air-drawing passage on the thermoconductive block so as to regulate the flowing rate of the humidified air.

JP 2000 292480 A publication discloses a method of estimating body composition from X-ray measurements performed on a fan-shaped distribution of X-rays comprising the steps of: scanning the body with a fan-shaped distribution of X-rays and an X-ray detector, each pixel adapted to a two-dimensional projection of the body; deriving dual energy X-ray measurements for locations, processing the X-ray measurements to derive projected body mass estimates for the respective pixel locations, and further processing the projected body mass estimates, and deriving an estimate of the true body mass for each pixel location taking into account the location of the attenuating material along the optical path from the source of the X-ray distribution to each location on the detector.

EP 2 309 247 A1 publication can be considered as the closest prior art disclosing an environment testing apparatus capable of achieving, on the surface of a test object, a stable condensation status with less variation in the condensation amount than that of already existing-art. The environment testing apparatus includes a regulator. On the basis of a signal from a condensation amount sensor, the regulator controls the temperature of a cooling/heating plate between a deviation-added value of the wet bulb temperature obtained from the wet bulb, and a deviation-added value of the dew-point temperature inside the test chamber.

However, none of the cited above prior art documents discloses or suggests a technical solution as described in details herein below.

### SUMMARY

An objective of the present disclosure is to provide an electronic cooling anti-condensation system and an anti-condensation method for the same, in which a cooling plate anti-condensation manner is provided, the redundant control of the cooling plates is achieved and continuous operation when a failure occurs is achieved, in order to overcome the defects in the prior art.

To achieve the above objective, the present invention provides an electronic cooling anti-condensation according to claim 1.

As a preferable embodiment, after obtaining a temperature and a humidity of the interior of the testing chamber acquired by the temperature and humidity sensor, the main controller calculates a dew point value of the air corresponding to the temperature and the humidity according to a stored dew point table.

As a preferable embodiment, the cooling plate control unit is further used for judging whether the electronic cooling plate operates regularly by detecting an output power, a current or a voltage of the electronic cooling plate.

As a preferable embodiment, the main controller is further used for prompting a serial number of the electronic cooling plate which generates the failure when the cooling plate control unit detects that the electronic cooling plate generates the failure.

As a preferable embodiment, the main controller identifies the serial number of the electronic cooling plate which generates the failure by detection of the cooling plate control unit and/or detection of the temperature sensors.

As a preferable embodiment, the main controller is further used for repeatedly activating a working circuit of a changed electronic cooling plate after the electronic cooling plate which generates the failure is changed.

The invention further provides an anti-condensation method according to claim 8.

Compared with the prior art, beneficial effects of the present disclosure lie in:

the present disclosure achieves real-time control of operation states of the electronic cooling plates, thereby realizing redundant control of the cooling plates, and preventing the cooling plates from causing condensation in the chamber body, so as to achieve continuous operation when a failure occurs.

### BRIEF DESCRIPTION OF THE DRAWINGS

To describe the technical solutions in the embodiments of the present disclosure or the prior art more clearly, the following briefly introduces the accompanying drawings required for describing the embodiments or the prior art. Apparently, the accompanying drawings in the following description show some embodiments in the present disclosure, and a person of ordinary skill in the art may still derive other drawings from these accompanying drawings without creative efforts.

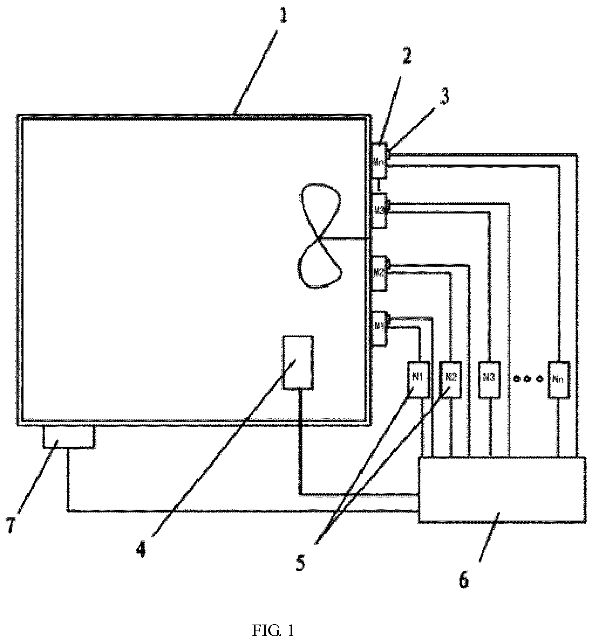

FIG. 1 is a schematic structural diagram of an electronic cooling anti-condensation system.

### DESCRIPTION OF THE EMBODIMENTS

Referring to FIG. 1, the present disclosure provides an electronic cooling anti-condensation system, and the system comprises a testing chamber 1, electronic cooling plates 2, temperature sensors 3, a temperature and humidity sensor 4, a cooling plate control unit 5 and a main controller 6. The following describes each component in detail with reference to the accompanying drawings.

The electronic cooling plates 2 are used for cooling and/or heating, there is at least one group of the electronic cooling plates 2 (such as M1, M2, ..., Mn), each group of the electronic cooling plates 2 are respectively mounted on a chamber wall of the testing chamber 1, and one end part of the electronic cooling plate dissipates heat outside the testing chamber while the other part thereof is fixed on the chamber wall or the interior of the testing chamber;.

The temperature sensors 3 are used for detecting temperatures of the electronic cooling plates 2, the temperature sensors 3 are mounted on a part, close to an inner side of the testing chamber, of each group of the electronic cooling plates 2, or a common part, close to the inner side of the testing chamber, of all electronic cooling plates, or the chamber wall, or cooling fins, close to the interior of the testing chamber, of the electronic cooling plates.

The temperature and humidity sensor 4 is used for detecting a temperature and a humidity of the interior of the testing chamber 1, and the temperature and humidity sensor 4 is mounted at the interior of the testing chamber 1.

The cooling plate control unit 5 is used for controlling operation and/or stop of the electronic cooling plates 2, there is at least one cooling plate control unit 5 (such as N1, N2, ..., Nn), the cooling plate control unit 5 is electrically connected with the corresponding electronic cooling plate 2 one to one, or is electronically connected with all the electronic cooling plates 2 one to multiple.

The main controller 6 is electrically connected to the temperature sensors 3, the temperature and humidity sensor 4, and the cooling plate control unit 5 and is used for calculating a dew point value of the air in the testing chamber 1 according to a temperature value and a humidity value of the interior of the testing chamber 1 acquired by the temperature and humidity sensor 4 and controlling the cooling plate control unit 5 to reduce the number of operating electronic cooling plates 2 or output powers of the electronic cooling plates 2 if the dew point value of the air is greater than a pre-determined threshold, wherein the pre-determined threshold is a temperature T1 °C of the electronic cooling plate 2 or a temperature T1+n °C of the electronic cooling plate 2 acquired by the temperature sensor 3, and n is greater than 0 and less than or equal to 10.

After obtaining a temperature and a humidity of the interior of the testing chamber 1 acquired by the temperature and humidity sensor 4, the main controller 6 calculates a dew point value of the air corresponding to the temperature and the humidity according to a stored dew point table, wherein the dew point table can be obtained according to the literature or the textbook.

In an embodiment, the cooling plate control unit 5 is further used for judging whether the electronic cooling plate 2 operates regularly by detecting an output power, a current or a voltage of the electronic cooling plate 2.

The main controller 6 is further used for automatically switching off a working circuit of an electronic cooling plate 2 which generates a failure, and starting a spare electronic cooling plate 2 or maintaining other electronic cooling plates 2 to regularly operate when the cooling plate control unit 5 detects that the electronic cooling plate 2 generates the failure.

In an embodiment, the main controller 6 is further used for prompting a serial number of the electronic cooling plate 2 which generates the failure when the cooling plate control unit 5 detects that the electronic cooling plate 2 generates the failure.

In an embodiment, the main controller 6 identifies the serial number of the electronic cooling plate 2 which generates the failure by detection of the cooling plate control unit 5 and/or detection of the temperature sensors 3. The two failure judgment manners can be used respectively or commonly.

In an embodiment, the main controller 6 is further used for repeatedly activating a working circuit of a changed electronic cooling plate 2 after the electronic cooling plate 2 which generates the failure is changed.

Furthermore, a first temperature sensor 7 is mounted at the exterior of the testing chamber and is used for detecting an ambient temperature, and if the ambient temperature is lower than the dew point of the air in the testing chamber, the main controller 6 prompts a possible condensation risk of a testing chamber sampling opening and/or performs a temperature regulation process on a sampling pipe.

Furthermore, the present disclosure provides an anti-condensation method for the electronic cooling anti-condensation system, which comprises the following steps:
(1), by the temperature and humidity sensor 4, acquiring a temperature and a humidity of the interior of the testing chamber 1 in real time, and by the temperature sensors 3, detecting temperatures of the electronic cooling plates 2 in real time; and
(2), calculating a dew point value of the air in the testing chamber 1 according to the temperature and the humidity, which is obtained by the main controller 6 and acquired by the temperature and humidity sensor 4, of the interior of the testing chamber 1, wherein, if the dew point value of the air is greater than a pre-determined threshold, the cooling plate control unit 5 is controlled to reduce the number of operating electronic cooling plates 2 or output powers of the electronic cooling plates 2, and the pre-determined threshold is a temperature T1 °C of the electronic cooling plate 2 or a temperature T1+n °C of the electronic cooling plate 2 acquired by the temperature sensor 3, and n is greater than 0 and less than or equal to 10, (3) wherein the main controller is further used for automatically switching off a working circuit of an electronic cooling plate which generates a failure, and starting a spare electronic cooling plate or maintaining other electronic cooling plates to regularly operate when the cooling plate control unit detects that the electronic cooling plate generates the failure.

To sum up, the present disclosure achieves real-time control of operation states of the electronic cooling plates, thereby realizing redundant control of the cooling plates, and preventing the cooling plates from causing condensation in the chamber body, so as to achieve continuous operation when a failure occurs.

The above-mentioned embodiments are preferred embodiments of the present disclosure, but the implementation manner of the present disclosure is not limited to the embodiments.

## Claims

1. An electronic cooling anti-condensation system, comprising a testing chamber (1), wherein the system further comprises:
electronic cooling plates (2), used for cooling and/or heating, wherein there is at least one group of the electronic cooling plates (2), each group of the electronic cooling plates (2) are respectively mounted on a chamber wall of the testing chamber (1), and one end part of the electronic cooling plate (2) dissipates heat outside the testing chamber (1) while the other part thereof is fixed on the chamber wall or the interior of the testing chamber (1);
temperature sensors (3), used for detecting temperatures of the electronic cooling plates (2), wherein the temperature sensors (3) are mounted on a part, close to an inner side of the testing chamber (1), of each group of the electronic cooling plates (2), or a common part, close to an inner side of the testing chamber (1), of all electronic cooling plates (2), or the chamber wall, or cooling fins, close to the interior of the testing chamber (1), of the electronic cooling plates (2);
a temperature and humidity sensor (4), used for detecting a temperature and a humidity of the interior of the testing chamber (1), wherein the temperature and humidity sensor (4) is mounted at the interior of the testing chamber (1);
a cooling plate control unit (5), used for controlling operation and/or stop of the electronic cooling plates (2), wherein the cooling plate control unit (5) is electrically connected with the corresponding electronic cooling plate (2) one to one, or is electronically connected with all the electronic cooling plates (2) one to multiple; and
a main controller (6), electrically connected to the temperature sensors (3), the temperature and humidity sensor (4), and the cooling plate control unit (5), and used for calculating a dew point value of the air in the testing chamber (1) according to a temperature value and a humidity value of the interior of the testing chamber (1) acquired by the temperature and humidity sensor (4) and controlling the cooling plate control unit (5) to reduce the number of operating electronic cooling plates (2) or output powers of the electronic cooling plates (2) if the dew point value of the air is greater than a pre-determined threshold, wherein the pre-determined threshold is a temperature T1 °C of the electronic cooling plate (2) or a temperature T1+n °C of the electronic cooling plate (2) acquired by the temperature sensor (3), and n is greater than 0 and less than or equal to 10,
wherein the main controller (6) is further used for automatically switching off a working circuit of an electronic cooling plate (2) which generates a failure, and starting a spare electronic cooling plate (2) or maintaining other electronic cooling plates (2) to regularly operate when the cooling plate control unit (5) detects that the electronic cooling plate (2) generates the failure.

2. The electronic cooling anti-condensation system according to claim 1, wherein after obtaining a temperature and a humidity of the interior of the testing chamber (1) acquired by the temperature and humidity sensor (4), the main controller (6) calculates a dew point value of the air corresponding to the temperature and the humidity according to a stored dew point table.

3. The electronic cooling anti-condensation system according to claim 1, wherein the cooling plate control unit (5) is further used for judging whether the electronic cooling plate (2) operates regularly by detecting an output power, a current or a voltage of the electronic cooling plate.

4. The electronic cooling anti-condensation system according to claim 1, wherein the main controller (6) is further used for prompting a serial number of the electronic cooling plate (2) which generates the failure when the cooling plate control unit (5) detects that the electronic cooling plate (2) generates the failure.

5. The electronic cooling anti-condensation system according to claim 4, wherein the main controller (6) identifies the serial number of the electronic cooling plate (2) which generates the failure by detection of the cooling plate control unit (5) and/or detection of the temperature sensors (3).

6. The electronic cooling anti-condensation system according to claim 1, wherein the main controller (6) is further used for repeatedly activating a working circuit of a changed electronic cooling plate (2) after the electronic cooling plate (2) which generates the failure is changed.

7. The electronic cooling anti-condensation system according to claim 1, wherein a first temperature sensor (7) is mounted at the exterior of the testing chamber (1) and is used for detecting an ambient temperature, and if the ambient temperature is lower than the dew point of the air in the testing chamber (1), the main controller (6) prompts a possible condensation risk of a testing chamber (1) sampling opening and/or performs a temperature regulation process on a sampling pipe.

8. An anti-condensation method for the electronic cooling anti-condensation system according to any one of claims 1 to 7, wherein the method comprises the following steps:
(1), by the temperature and humidity sensor (4), acquiring a temperature and a humidity of the interior of the testing chamber (1) in real time, and by the temperature sensors (3), detecting temperatures of the electronic cooling plates (2) in real time; and
(2), calculating a dew point value of the air in the testing chamber (1) according to the temperature and the humidity, which is obtained by the main controller (6) and acquired by the temperature and humidity sensor (4), of the interior of the testing chamber (1), wherein, if the dew point value of the air is greater than a pre-determined threshold, the cooling plate control unit (5) is controlled to reduce the number of operating electronic cooling plates (2) or output powers of the electronic cooling plates (2), and the pre-determined threshold is a temperature T1 °C of the electronic cooling plate (2) or a temperature T1+n °C of the electronic cooling plate (2) acquired by the temperature sensor (3), and n is greater than 0 and less than or equal to 10,
**characterized in that** the method further comprises the step:
(3), by the main controller (6), automatically switching off a working circuit of an electronic cooling plate (2) which generates a failure, and starting a spare electronic cooling plate (2) or maintaining other electronic cooling plates (2) to regularly operate when the cooling plate control unit (5) detects that the electronic cooling plate (2) generates the failure.

## Patentansprüche

1. Ein elektronisches Kühlsystem mit Verhinderung von Kondensationsbildung, umfassend eine Prüfkammer (1), wobei das System ferner umfasst:
elektronische Kühlplatten (2), die zum Kühlen und/oder Heizen verwendet werden, wobei mindestens eine Gruppe der elektronischen Kühlplatten (2) vorhanden ist, jede Gruppe der elektronischen Kühlplatten (2) jeweils an einer Kammerwand des Prüfkammer (1) montiert ist, und ein Endteil der elektronischen Kühlplatte (2) Wärme außerhalb der Prüfkammer (1) degradiert, während der andere Teil davon an der Kammerwand oder dem Inneren der Prüfkammer (1) befestigt ist;
Temperaturaufnehmer (3), die zum Erfassen von Temperaturen der elektronischen Kühlplatten (2) verwendet werden, wobei die Temperaturaufnehmer (3) an einem Teil nahe einer Innenseite der Prüfkammer (1) jeder Gruppe der elektronische Kühlplatten (2) oder an einem gemeinsamen Teil nahe einer Innenseite der Prüfkammer (1) aller elektronischen Kühlplatten (2), oder an der Kammerwand, oder an den Kühlrippen nahe dem Inneren der Prüfkammer (1) der elektronischen Kühlplatten (2) montiert sind;
einen Temperatur- und Feuchtigkeitsaufnehmer (4), der zum Erfassen einer Temperatur und einer Feuchtigkeit des Inneren der Prüfkammer (1) verwendet wird, wobei der Temperatur- und Feuchtigkeitsaufnehmer (4) im Inneren der Prüfkammer (1) montiert ist;
eine Kühlplattensteuereinheit (5), die zum Steuern des Betriebs und/oder des Stopps der elektronischen Kühlplatten (2) verwendet wird, wobei die Kühlplattensteuereinheit (5) mit der entsprechenden elektronischen Kühlplatte (2) eins zu eins elektrisch verbunden ist oder mit allen elektronischen Kühlplatten (2) eins zu mehr elektronisch verbunden ist; und
eine Hauptsteuerung (6), die mit den Temperaturaufnehmer (3), dem Temperatur- und Feuchtigkeitsaufnehmer (4) und der Kühlplattensteuereinheit (5) elektrisch verbunden ist und zum Berechnen eines Taupunktwerts der Luft in der Prüfkammer (1) nach einem von dem Temperatur- und Feuchtigkeitsaufnehmer (4) erfassten Temperaturwert und Feuchtigkeitswert des Inneren der Prüfkammer (1) und zum Steuern der Kühlplattensteuereinheit (5) zur Reduzierung der Anzahl der in Betrieb befindlichen elektronischen Kühlplatten (2) oder Ausgangsleistungen der elektronischen Kühlplatten (2), wenn der Taupunktwert der Luft größer als ein vorbestimmter Schwellenwert ist, verwendet wird, wobei der vorbestimmte Schwellenwert eine Temperatur T1 °C der elektronischen Kühlplatte (2) oder eine Temperatur T1 + n °C der elektronischen Kühlplatte (2) ist, die von dem Temperaturaufnehmer (3) erfasst wird, und n ist größer als 0 und kleiner als oder gleich 10,
wobei die Hauptsteuerung (6) ferner dazu verwendet wird, einen Arbeitskreislauf einer elektronischen Kühlplatte (2), die einen Fehler erzeugt, automatisch abzuschalten und eine vorrätige elektronische Kühlplatte (2) zu starten oder andere elektronische Kühlplatten (2) aufrechtzuerhalten regelmäßig laufen, wenn die Kühlplattensteuereinheit (5) erkennt, dass die elektronische Kühlplatte (2) den Fehler erzeugt.

2. Das elektronische Kühlsystem mit Verhinderung von Kondensationsbildung nach Anspruch 1, wobei nach dem Erhalten einer Temperatur und einer Feuchtigkeit des Inneren der Prüfkammer (1), die von dem Temperatur- und Feuchtigkeitsaufnehmer (4) erfasst wurden, die Hauptsteuerung (6) einen Taupunktwert der Luft entsprechend der Temperatur und der Feuchtigkeit gemäß einer hinterlegten Taupunkttabelle berechnet.

3. Das elektronische Kühlsystem mit Verhinderung von Kondensationsbildung nach Anspruch 1, wobei die Kühlplattensteuereinheit (5) ferner zum Beurteilen verwendet wird, ob die elektronische Kühlplatte (2) regelmäßig arbeitet, durch Erfassen einer Ausgangsleistung, eines Stroms oder einer Spannung der elektronischen Kühlplatte.

4. Das elektronische Kühlsystem mit Verhinderung von Kondensationsbildung nach Anspruch 1, wobei die Hauptsteuerung (6) ferner verwendet wird, um eine Seriennummer der elektronischen Kühlplatte (2) einzubringen, die den Fehler erzeugt, wenn die Kühlplattensteuereinheit (5) erkennt, dass die elektronische Kühlplatte (2) den Fehler erzeugt.

5. Das elektronische Kühlsystem mit Verhinderung von Kondensationsbildung nach Anspruch 4, wobei die Hauptsteuerung (6) die Seriennummer der elektronischen Kühlplatte (2) identifiziert, die den Fehler durch Erkennung der Kühlplattensteuereinheit (5) und/oder Erkennung der Temperaturaufnehmer (3) erzeugt.

6. Das elektronische Kühlsystem mit Verhinderung von Kondensationsbildung nach Anspruch 1, wobei die Hauptsteuerung (6) ferner zum wiederholten Aktivieren eines Arbeitskreislauf einer geänderten elektronischen Kühlplatte (2) nach der Änderung der elektronischen Kühlplatte (2), die den Fehler erzeugt, verwendet wird.

7. Das elektronische Kühlsystem mit Verhinderung von Kondensationsbildung nach Anspruch 1, wobei ein erster Temperaturaufnehmer (7) an der Außenseite der Prüfkammer (1) montiert ist und zum Erfassen einer Umgebungstemperatur verwendet wird, und wenn die Umgebungstemperatur niedriger als der Taupunkt der Luft in der Prüfkammer (1) ist, die Hauptsteuerung (6) eine mögliche Kondensationsgefahr einer Probenahmeöffnung einer Prüfkammer (1) einbringt und/oder eine Temperaturregelung an einem Probenahmerohr durchführt.

8. Ein Verfahren mit Verhinderung von Kondensationsbildung für das elektronische Kühlsystem mit Verhinderung von Kondensationsbildung nach einem der Ansprüche 1 bis 7, wobei das Verfahren die folgenden Schritte umfasst:
(1) Erfassen einer Temperatur und einer Feuchtigkeit des Inneren der Prüfkammer (1) in Echtzeit mit dem Temperatur- und Feuchtigkeitsaufnehmer (4) und Erfassen von Temperaturen der elektronischen Kühlplatten (2) in Echtzeit mit den Temperaturaufnehmer (3); und
(2) Berechnen eines Taupunktwerts der Luft in der Prüfkammer (1) gemäß der Temperatur und der Feuchtigkeit, die mit der Hauptsteuerung (6) erhalten wird und mit dem Temperatur- und Feuchtigkeitsaufnehmer (4) erfasst wird, des Inneren der Prüfkammer (1), wobei wenn der Taupunktwert der Luft größer als ein vorbestimmter Schwellenwert ist, die Kühlplattensteuereinheit (5) gesteuert wird, um die Anzahl der in Betrieb befindlichen elektronischen Kühlplatten (2) oder Ausgangsleistungen der elektronischen Kühlplatten (2) zu reduzieren, und wobei der vorbestimmte Schwellenwert eine Temperatur T1 °C der elektronischen Kühlplatte (2) oder eine Temperatur T1 + n °C der elektronischen Kühlplatte (2) ist, die von dem Temperaturaufnehmer (3) erfasst wird, und n ist größer als 0 und kleiner als oder gleich 10,
**dadurch gekennzeichnet, dass** das Verfahren ferner den Schritt umfasst:
(3) automatisches Abschalten mit der Hauptsteuerung (6) eines Arbeitskreislauf einer elektronischen Kühlplatte (2), die einen Fehler erzeugt, und Starten einer vorrätigen elektronischen Kühlplatte (2) oder Aufrechterhaltung andere elektronische Kühlplatten (2) regelmäßig zu laufen, wenn die Kühlplattensteuereinheit (5) erkennt, dass die elektronische Kühlplatte (2) den Fehler erzeugt.

## Revendications

1. Un système anti-condensation de refroidissement électronique, comprenant une chambre d'essai (1), **caractérisé en ce que** le système comprend en outre:
des plaques de refroidissement électroniques (2), utilisées pour le refroidissement et/ou le chauffage, dans lesquelles il y a au moins un groupe de plaques de refroidissement électroniques (2), chaque groupe de plaques de refroidissement électroniques (2) est respectivement monté sur une paroi de chambre de la chambre d'essai (1), et une partie d'extrémité de la plaque de refroidissement électronique (2) dissipe la chaleur à l'extérieur de la chambre d'essai (1) tandis que l'autre partie de celle-ci est fixée sur la paroi de chambre ou à l'intérieur de la chambre d'essai (1);
capteurs de température (3), utilisés pour détecter les températures des plaques de refroidissement électroniques (2), dans lequel les capteurs de température (3) sont montés sur une partie, à proximité d'un côté intérieur de la chambre d'essai (1), de chaque groupe de plaques de refroidissement électroniques (2), ou une partie commune, à proximité d'un côté intérieur de la chambre d'essai (1), de toutes les plaques de refroidissement électroniques (2), ou de la paroi de chambre, ou des bouts de refroidissement, à proximité de l'intérieur de la chambre d'essai (1), des plaques de refroidissement électroniques (2);
un capteur de température et d'humidité (4), utilisé pour détecter une température et une humidité de l'intérieur de la chambre d'essai (1), dans lequel le capteur de température et d'humidité (4) est monté à l'intérieur de la chambre d'essai (1);
une unité de commande (5) de plaque de refroidissement, utilisée pour commander le fonctionnement et/ou l'arrêt des plaques de refroidissement électroniques (2), dans lequel l'unité de commande (5) de plaque de refroidissement est connectée électriquement avec la plaque de refroidissement électronique (2) correspondante une à une, ou est connecté électroniquement à toutes les plaques de refroidissement électroniques (2) une à plusieurs; et
un contrôleur principal (6), connecté électriquement aux capteurs de température (3), au capteur de température et d'humidité (4) et à l'unité de commande (5) de plaque de refroidissement, et utilisé pour calculer une valeur de point de rosée de l'air dans le chambre d'essai (1) en fonction d'une valeur de température et d'une valeur d'humidité de l'intérieur de la chambre d'essai (1) acquises par le capteur de température et d'humidité (4) et contrôler l'unité de commande (5) de plaque de refroidissement pour réduire le nombre des plaques de refroidissement électroniques (2) fonctionnant ou les puissances de sortie des plaques de refroidissement électroniques (2) si la valeur du point de rosée de l'air est supérieure à un seuil prédéterminé, le seuil prédéterminé étant une température T1 °C de la plaque de refroidissement électronique (2) ou une température T1+n °C de la plaque électronique de refroidissement (2) acquise par le capteur de température (3), et n est supérieur à 0 et inférieur ou égal à 10,
dans lequel le contrôleur principal (6) est en outre utilisé pour arrêter automatiquement un circuit de fonctionnement d'une plaque de refroidissement électronique (2) qui génère une panne, et démarrer une plaque de refroidissement électronique (2) de rechange ou maintenir d'autres plaques de refroidissement électroniques (2) qu'elles fonctionnent régulièrement lorsque l'unité de commande (5) de plaque de refroidissement détecte que la plaque de refroidissement électronique (2) génère la panne.

2. Le système anti-condensation de refroidissement électronique selon la revendication 1, **caractérisé en ce qu'**après avoir obtenu une température et une humidité de l'intérieur de la chambre d'essai (1) acquises par le capteur de température et d'humidité (4), le contrôleur principal (6) calcule une valeur de point de rosée de l'air correspondante à la température et à l'humidité selon une table de point de rosée stockée.

3. Le système anti-condensation de refroidissement électronique selon la revendication 1, **caractérisé en ce que** l'unité de commande (5) de plaque de refroidissement est en outre utilisée pour juger si la plaque de refroidissement électronique (2) fonctionne régulièrement en détectant une puissance de sortie, un courant ou un voltage de la plaque de refroidissement.

4. Le système anti-condensation de refroidissement électronique selon la revendication 1, **caractérisé en ce que** le contrôleur principal (6) est en outre utilisé pour signaler le numéro de série de la plaque de refroidissement électronique (2) qui génère la panne lorsque l'unité de commande (5) de plaque de refroidissement détecte que la plaque de refroidissement électronique (2) génère la panne.

5. Le système anti-condensation de refroidissement électronique selon la revendication 4, **caractérisé en ce que** le contrôleur principal (6) identifie le numéro de série de la plaque de refroidissement électronique (2) qui génère la panne par détection de l'unité de commande (5) de plaque de refroidissement et/ou détection des capteurs de température (3).

6. Le système anti-condensation de refroidissement électronique selon la revendication 1, **caractérisé en ce que** le contrôleur principal (6) est en outre utilisé pour activer de manière répétée un circuit de fonctionnement d'une plaque de refroidissement électronique (2) rechangée après du rechange de la plaque de refroidissement électronique (2) qui génère la panne.

7. Le système anti-condensation de refroidissement électronique selon la revendication 1, dans lequel un premier capteur de température (7) est monté à l'extérieur de la chambre d'essai (1) et est utilisé pour détecter une température ambiante, et si la température ambiante est inférieure à la point de rosée de l'air dans la chambre d'essai (1), le contrôleur principal (6) signale un éventuel risque de condensation d'une ouverture de prélèvement de la chambre d'essai (1) et/ou effectue une régulation de température sur une conduite de prélèvement.

8. Un procédé anti-condensation pour le système anti-condensation de refroidissement électronique selon l'une quelconque des revendications 1 à 7, **caractérisé en ce que** le procédé comprend les étapes suivantes pour:
(1) acquérir en temps réel une température et une humidité de l'intérieur de la chambre d'essai (1) par le capteur de température et d'humidité (4), et détecter en temps réel les températures des plaques de refroidissement électroniques (2) par les capteurs de température (3); et
(2), calculer une valeur de point de rosée de l'air dans la chambre d'essai (1) en fonction de la température et de l'humidité, qui est obtenue par le contrôleur principal (6) et acquise par le capteur de température et d'humidité (4), de l'intérieur de la chambre d'essai (1), dans lequel, si la valeur du point de rosée de l'air est supérieure à un seuil prédéterminé, l'unité de commande (5) de plaque de refroidissement est commandée pour réduire le nombre de plaques de refroidissement électroniques (2) fonctionnant ou les puissances de sortie des plaques de refroidissement électroniques (2), le seuil prédéterminé étant une température T1 °C de la plaque de refroidissement électronique (2) ou une température T1+n°C de la plaque électronique de refroidissement (2) acquise par le capteur de température (3), et n est supérieur à 0 et inférieur ou égal à 10,
**caractérisé en ce que** le procédé comprend en outre l'étape pour:
(3) arrêter automatiquement un circuit de fonctionnement d'une plaque de refroidissement électronique (2) qui génère une panne, et démarrer une plaque de refroidissement électronique (2) de rechange par le contrôleur principal (6) ou maintenir d'autres plaques de refroidissement électroniques (2) qu'elles fonctionnent régulièrement lorsque l'unité de commande (5) de plaque de refroidissement détecte que la plaque de refroidissement électronique (2) génère la panne.
